# EUROPÄISCHE PATENTSCHRIFT

(11) **EP 2 028 131 B1**
(45) Veröffentlichungstag und Bekanntmachung des Hinweises auf die Patenterteilung: **26.10.2011**
(21) Anmeldenummer: 08014906.5
(22) Anmeldetag: 22.08.2008
(51) Int. Cl.: B65D 83/14

(54) **Feststoffventil**
Solid matter valve
Soupape en matière solide

(30) Priorität: 24.08.2007 DE 102007040296
(43) Veröffentlichungstag der Anmeldung: 25.02.2009
(73) Patentinhaber: Werner, Hans Jürgen, 34414 Warburg (DE); Fazekas, Gábor, 1163 Budapest (HU)
(72) Erfinder: Rideg, Mihály, 1158 Budapest (HU)
(74) Vertreter: Thiel, Christian

(56) Entgegenhaltungen:
- EP-A1- 1 074 484
- US-A- 2 809 774
- US-A- 5 450 983

## Beschreibung

Die Erfindung betrifft ein Feststoffventil für Druckdosen, insbesondere für die Ausbringung von Montageschäumen, mit einem in einem Ventilteller angeordneten Ventilkörper, einem in einer zentralen Ausnehmung des Ventilkörpers geführten Stem mit wenigstens einer durch Betätigung des Stems freigebbaren Eintrittsöffnung für den Druckdoseninhalt sowie wenigstens einer Austrittsöffnung, einem auf den Stem wirkenden elastischen Element und zwischen Ventilteller und Ventilkörper sowie zwischen Ventilkörper und Stem wirkenden Dichtelementen. Ein derartiges Feststoffventil ist aus US 5,450,983 bekannt.

Die Feststoffventile können insbesondere für die Ausbringung von Montage- und Dichtschäumen aus Aerosoldosen eingesetzt werden, eignen sich jedoch grundsätzlich für alle Formen von Aerosoldosen, aus denen Materialien mit einem Feststoffgehalt ausgebracht werden, beispielsweise auch für die Ausbringung von Lack, Klebstoff, Dicht- und Reinigungsmitteln.

Montageschäume, insbesondere Polyurethanschäume und Schäume aus vergleichbaren Materialien, haben in der Technik ein großes Anwendungsgebiet gefunden. Sie dienen im Baubereich zur Befestigung von Elementen wie Fensterrahmen, Türzargen und anderen Fertigteilen, zum Schließen von Öffnungen und zum Ausschäumen von Hohlräumen und Taschen. Sie werden vielfach zur Wärme- und Schalldämmung eingesetzt. Ferner sind sie geeignet, in damit gefüllten Hohlräumen die Schwitzwasserbildung mit nachfolgender Korrosion zu vermeiden.

Zur Schaumbildung werden zumeist in einem Druckbehälter enthaltene Prepolymere verwandt, die häufig durch die Einwirkung von Feuchtigkeit, insbesondere von Luftfeuchtigkeit, aushärten. Nach der Freisetzung des Gemisches aus Treibmitteln und Schaumbildner findet eine Reaktion zwischen dem Prepolymer und der in der Luft enthaltenen Feuchtigkeit statt. Das führt zur Bildung eines dauerhaften Schaums. Je nach Feuchtigkeitsgehalt der Luft erfolgt die Aushärtung in mehr oder weniger kurzer Zeit. Bei hoher Luftfeuchtigkeit benötigt die Härtung nur wenige Minuten. Entsprechendes gilt für silanterminierte Polyurethanschäume. Zweikomponentenschäume enthalten in der Druckdose zusätzlich eine separate Vernetzerkomponente.

Zum Ausbringen oder Austragen des Schaums dienen Spezialventile, die durch Kippen oder Eindrücken den Weg des Schaums freigeben. Während des Transports und der Zwischenlagerung müssen Sie hingegen für eine sichere Abdichtung sorgen. Falls die Abdichtung nicht ausreicht, diffundiert Feuchtigkeit in den Ventilmechanismus ein, die die Prepolymere im Ventil aushärten lässt, was dessen einwandfreie Funktion beeinträchtigt. Im Extremfall wird das Ventil durch darin gebildete Polymer vollständig blockiert.

Bekannt sind Tellerventile, in denen das Ventilverschlusselement über eine Schraubenfeder mit einem Halteteil als Widerlager verbunden ist. Das Halteteil ragt frei in den Innenraum des Druckbehälters. Die Feder ist zwischen Halteteil und Ventilverschlusselement eingesetzt und stellt dessen festen Sitz am Ventilteller sicher. Halteteil und Feder sind für die auszubringenden Medien voll zugänglich. Dieses Gemisch aus Treibmittel und Prepolymer verlässt beim Betätigen des Ventilverschlusselement den Druckbehälter und gelangt dabei in den Bereich der Feder und ihres Halteteils. Bei Nachlassen des Drucks auf das Ventilverschlusselement wird dieses von der Feder wieder gegen den Ventilteller gepresst, so dass kein weiteres Gemisch mehr austreten kann. Gemisch dass sich noch im Ventilraum befindet, wird durch das Treibmittel ausgetragen.

Derartige Tellerventile mit Federmechanismus eignen sich gut für den Anschluss an Spritzpistolen. Sie haben aber den Nachteil, dass die Funktion der Feder über kurz oder lang beeinträchtigt wird oder sogar blockiert, weil Feuchtigkeit in den Ventilmechanismus eindiffundiert und zur Polymerbildung im Federbereich führt. In der Folge kann der Druckbehälter entweder nicht mehr geregelt entleert werden oder wird undicht und bläst unkontrolliert ab.

Gemäß anderer Ventilvarianten sind am Umfang des Ventilverschlusselements Dichtungsabschnitte vorgesehen. Diese weisen mindestens einen elastisch verformbaren, scheibenförmigen Abschnitt auf, der radial vom Verschlusselement absteht und sich unter Verformung an den Ventilsitz anlegt. Dicht- und Verschlusselement sind aus einem Guss und folglich aus ein und demselben Material. Für die Verformung benötigen diese Elemente eine gewisse Elastizität, die andererseits die Anpresskräfte eingrenzt und die Dichtigkeit mindert.

Aufgabe der Erfindung ist deshalb, ein Ventil bereit zu stellen, welches die zuvor beschriebenen Nachteile herkömmlicher Ventile vermeidet. Es soll gegen das Eindringen von Feuchtigkeit in den im Druckbehälter liegenden Ventilbereich schützen. Gleichzeitig müssen aber Ausbringhilfen, wie Spritzpistolen, angeschlossen werden können. Es soll einfach aufgebaut sein und eine hohe Betriebssicherheit gewährleisten. Insbesondere soll ein solches Ventil keinen innenliegenden Federmechanismus aufweisen.

Zur Lösung dieser Aufgabe schlägt die Erfindung ausgehend vom Ventil der eingangs genannten Art vor, dass das Feststoffventil die Merkmale des kennzeichnenden Teils des ersten Anspruchs aufweist.

Das Ventil ermöglicht den einwandfreien Anschluss der Druckdose an eine Spritzpistole herkömmlicher Bauart. Das erfindungsgemäße Ventil verfügt mit den zwischen Ventilkörper und Stem wirkenden Dichtelementen und dem zumindest zum Teil als Formkörper ausgebildeten elastischen Element über zwei unabhängige Dichtelemente, die das Einbringen von Feuchtigkeit in das Ventil erschweren.

Die Begriffe "dosenseitig" und "ventilseitig", wie sie in der Beschreibung und den Ansprüchen verwandt werden, bedeuten, in einer Ausrichtung entlang der zentralen Achse einer Druckdose, das der Druckdose zugewandte Ende eines Teils (dosenseitig) bzw. das aus der Dose herausweisende Ende eines Teils (ventilseitig).

Das erfindungsgemäße Feststoffventil für Druckdosen weist einen üblichen Ventilteller auf, der eine kreisförmige zentrale Ausnehmung hat. Der Ventilteller hat in der Regel zwischen der Ausnehmung und dem Außenrand ein wannenförmiges Profil mit einem hoch gezogenen Innenrand, an dem der Ventilkörper festgelegt ist.

Der Ventilkörper selbst kann in an und für sich bekannter Weise an den Ventilteller angespritzt sein, d. h. der hochgezogene Innenrand des Ventiltellers befindet sich im Inneren des Ventilkörpers. Alternativ und hier bevorzugt ist eine Ausführungsform, bei der der Ventilkörper an die Form des Ventiltellers angepasst ist, einen aufgehenden Rand aufweist, der mit einem nach außen weisenden Vorsprung über den Innenrand des Ventiltellers greift. Gleichzeitig weist der Ventilkörper einen nach außen weisenden Bereich auf, der die Kontur des Ventiltellers aufnimmt und sich eng an diesen anschmiegt. Der nach außen weisende und über den Innenrand des Ventiltellers greifende Vorsprung sichert den Ventilkörper am Ventilteller. Ein dosenseitig außen am Ventilkörper umlaufender Rand kann zur Stabilisierung der Form vorgesehen sein, ebenso ein weiterer weiter innen, etwa in Höhe des ventilseitig aufgehenden Rands.

Es ist zweckmäßig, dass der Ventilkörper im Kontaktbereich zum Ventilteller konzentrisch umlaufende Dichtlippen aufweist, die eine zusätzliche Abdichtung herbeiführen. Vorzugsweise sind diese Dichtlippen so angeordnet, dass sie auf einen einwärts gerundeten Bereich des Ventiltellers am Fuß des aufgehenden inneren Rands wirken.

Der Ventilkörper weist eine zentrale Ausnehmung auf, in der der Stem des Ventils geführt wird. Am dosenseitigen Rand dieser zentralen Ausnehmung befindet sich wenigstens eine konzentrisch umlaufende Dichtlippe, die gegen einen am Stem angeordneten Dichtsitz wirkt. Vorzugsweise weist der Ventilkörper wenigstens zwei Dichtlippen in diesem Bereich auf. Bei dem Dichtsitz des Stems handelt es sich um eine am dosenseitigen Ende des Stems angeordnete konzentrische Erweiterung mit konischem oder gewölbtem Außenverlauf. Bei geschlossenem Ventil (der Stem befindet sich in der Ruheposition) wirken die Dichtlippen gegen diese konzentrische Erweiterung und schließen die am Stem seitlich am dosenseitigen Ende vorgesehenen Eintrittsöffnungen gegen das Doseninnere ab.

Zweckmäßigerweise weist der Ventilkörper zwei derartig wirkende Dichtlippen auf, die im Wesentlichen parallel zueinander und parallel zum Verlauf des Stems auf den Dichtsitz des Stems ausgerichtet sind.

Der Stem des erfindungsgemäßen Feststoffventils ist in der zentralen Ausnehmung des Ventilkörpers beweglich angeordnet. Insbesondere führt der Ventilkörper mit seiner an der Außenwandung des Stems anliegenden Innenwandung den Stem und ermöglicht eine Betätigung in der Vertikalen. In der Ruheposition befindet sich der Stem in einer oberen Position, bei der die Dichtlippen des Ventilkörpers gegen den Dichtsitz am Stem abdichten (Ruheposition). In einer unteren Position in eingedrücktem Zustand fällt die Dichtwirkung der Dichtlippen gegen den Dichtsitz fort und die am dosenseitigen Ende des Stems angeordneten Eintrittsöffnungen für das Prepolymer sind vom Doseninneren her frei zugänglich (Arbeitsposition). Der Stem hat insbesondere eine obere Austrittsöffnung, die den freien Austritt der Prepolymer/Treibgasmischung in der Arbeitsposition ermöglicht.

Das elastische Element erfüllt zwei Funktionen. Zum einen ist dies die Federfunktion, um den Stem in die Ruheposition zurückzuführen. "Gummielastisch" bedeutet in diesem Zusammenhang, dass das Element wie Gummi eine Rückstellkraft entfaltet. Zum anderen dient das elastische Element als Dichtelement. Diese Dichtwirkung tritt in zweifacher Hinsicht auf, zum einen im dosenseitigen Bereich des elastischen Elements zwischen Ventilkörper und Stem; hier wird der Schaumaustritt insbesondere bei geöffnetem Ventil zwischen Ventilkörper und darin geführtem Stem verhindert. Zum anderen ist dies die Dichtwirkung gegenüber einer angeschlossenen Spritzpistole, die mit ihrer Aufnahme über das elastische Element reicht und, bei geöffnetem Ventil und anstehendem Schaum, auch in diesem Bereich der Dichtung bedarf. Hierzu können außen umlaufende Dichtrippen vorgesehen sein.

Auch diese Dichtwirkung wird über das elastische Element insbesondere in der Arbeitsposition des Ventils erzielt, wie weiter unten ausgeführt.

Das elastische Element stützt sich dosenseitig am Ventilkörper und ventilseitig am oberen Ende des Stems ab. Eindrücken des Stems führt zu einer Kompression des elastischen Elements und damit zu einer Verstärkung der Dichtwirkung im Bereich des Ventilkörpers. Das elastische Element weist zumindest ein aus einem gummielastischen Material bestehendes Formteil auf, ist aber vorzugsweise insgesamt ein Formteil aus solchem gummielastischem Material. Bevorzugtes Material ist dazu ein Kunststoff, insbesondere ein thermoplastisches Elastomer (TPE), der bzw. das die Fertigung durch Spritzgießen erlaubt. Das elastische Element kann aber auch aus mehreren Teilen bestehen, wie nachstehend noch ausgeführt.

Gemäß einer bevorzugten Ausführungsform stützt sich das elastische Element am ventilseitigen Ende des Stems gegen einen Befestigungsring ab, der in einer Nut des Stems festgelegt ist. Ein solcher Befestigungsring besteht beispielsweise aus einem relativ harten Material, etwa einem Polyalkylen und vorzugsweise aus Polypropylen. Am dosenseitigen Ende ist das elastische Element vorzugsweise in einer konzentrischen Erweiterung der zentralen Ausnehmung des Ventilkörpers gelagert.

Das elastische Element umgibt den Stem des erfindungsgemäßen Feststoffventils konzentrisch. Insbesondere wenn das elastische Element aus einem einstückigen Formteil besteht, ist es zweckmäßig, im dosenseitigen Bereich umlaufend in der Innenwandung eine Nut oder Ausnehmung vorzusehen, die dazu bestimmt ist, bei der Kompression des elastischen Elements verdrängtes Volumen aufzunehmen. Diese Nut oder Ausnehmung ist zweckmäßigerweise von zwei angrenzenden Wülsten umgeben, die sich gegen den Stem abstützen und insbesondere bei der Kompression des elastischen Elements eine verstärkte Dichtwirkung herbeiführen.

Um die Betätigung des Ventils zu erleichtern, ist es zweckmäßig, das elastische Element in seinem zentralen Bereich im Abstand zur Außenwandung des Stems anzuordnen. Dies bedeutet, dass um den Stem herum, abgesehen vom dosenseitigen (Fuß) und ventilseitigen (Kopf) Ende des elastischen Elements, das elastische Element nicht an der Außenwandung des Stems anliegt sondern im Abstand dazu verläuft. Dies verhindert die Reibung und erleichtert damit die Betätigung des Ventils und gibt zudem ein gewisses Reservevolumen, in das sich die durch die Kompression verdrängte Masse des elastischen Element hinein ausdehnen kann. Es versteht sich, dass ein ähnlicher Effekt hier hinsichtlich des "Reservevolumens" mit entsprechenden Ausnehmungen oder Nuten in der Außenwandung des Stems erzielen lässt.

Gemäß einer weiteren Ausführungsform weist das elastische Element zusätzlich eine Schraubenfeder auf, die entweder in das elastische Element integriert ist oder dieses verstärkt. Integriert heißt, dass die Schraubenfeder in das elastische Element ganz oder teilweise eingespritzt ist oder in anderer Art und Weise damit fest verbunden ist. Das elastische Element kann aber auch aus zwei oder mehr Teilen bestehen, von denen eines eine solche Schraubenfeder ist.

Ein solches mehrteiliges elastisches Element besteht beispielsweise aus einem Fußteil, einem Kopfteil sowie einer zwischen Fußteil und Kopfteil eingespannten Schraubenfeder. Dabei kann die Schraubenfeder zwischen Fußteil und Kopfteil eingespannt sein. Alternativ sind Kopf- und Fußteil an der Schraubenfeder am ventilseitigen Ende bzw. am dosenseitigen Ende angespritzt. Auch in diesem Fall ist zweckmäßig, am Fußteil, das sich am dosenseitigen Ende des mehrteiligen elastischen Elements befindet, die innen umlaufende Nut zur Verbesserung der Dichtwirkung und zur Bereitstellung von Reservevolumen vorzusehen. Am ventilseitig angeordneten Kopfelement kann eine herabreichende Schürze vorgesehen sein, die den Stem im Abstand umgibt. Fernern können am Kopfteil nach außen weisende Dichtrippen zur Abdichtung gegen die Aufnahme einer Spritzpistole vorgesehen sein. Ein derartiges elastisches Element weist vorzugsweise einen am Stem festgelegten Befestigungsring auf, wie er vorstehend beschrieben ist. Kopfteil und Fußteil sind Formteile aus einem gummielastischen Material, vorzugsweise einem thermoplastischen Elastomer (TPE). Bei der Schraubenfeder handelt es sich um eine solche aus einem üblichen Federstahl. Ventilkörper, Stem und Befestigungsring werden zweckmäßigerweise aus einem Polyalkylen hergestellt, beispielsweise aus Polypropylen, in einer Spritzgussanlage.

Die Erfindung wird durch die beiliegenden Abbildungen näher erläutert. Es zeigen:
- Fig. 1:: Eine Gesamtansicht eines in den Dom einer Druckdose eingekrimpten erfindungsgemäßen Feststoffventils;
- Fig. 2:: den Ventilkörper des Feststoffventils gemäß Fig. 1;
- Fig. 3:: den Stem eines Feststoffventils gemäß Fig. 1;
- Fig. 4:: das elastische Element des Feststoffventils gemäß Fig. 1;
- Fig. 5:: den Befestigungsring des Feststoffventils gemäß Fig. 1;
- Fig. 6:: eine zweite Variante eines Feststoffventils gemäß der Erfindung;
- Fig. 7:: einen Federkorb als Teil eines erfindungsgemäßen Ventils; und
- Fig. 8:: das Zusammenwirken des Federkorbs von Fig. 7 mit einem Ventilkörper.

### Alle Abbildungen sind Schnittdarstellungen.

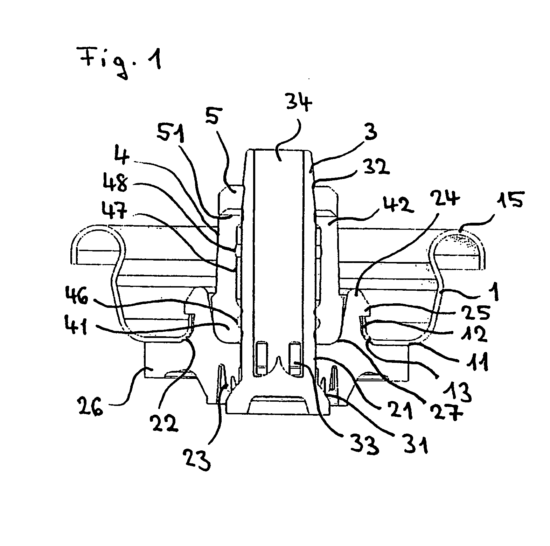

Figur 1 zeigt im Schnitt den Domteil einer Aerosoldose mit einem eingekrimpten erfindungsgemäßen Feststoffventil. Das Feststoffventil ist über den Ventilteller 1 am Dom der Dose festgekrimpt, wobei der Ventilteller mit seinem Krimprand 15 über und um den oberen Rand des Dosendoms D greift. Der Ventilteller 1 selbst weist eine zentrale Ausnehmung auf, um die ein rinnen- oder wannenförmiger zentraler Teil 11 umläuft. Auf der Innenseite ist der Ventilteller durch den aufgehenden Rand 12 begrenzt, außen steigt die Wanne zum Krimprand 15 an.

Innerhalb des Ventiltellers 1 befindet sich der Ventilkörper 2, in dessen zentraler runder Ausnehmung der Ventilstem 3 geführt wird. Der Ventilkörper 1 ist über einen aufgehenden Rand 24 mit nach außen vorkragendem Vorsprung 25 am aufgehenden Innenrand 12 des Ventiltellers 1 festgelegt; eine nach außen weisende runde Fläche 26 schmiegt sich an der Unterseite der Wanne 11 des Ventiltellers 1 an. Die Form des Ventilkörpers 2 wird durch den dosenseitig umlaufenden Außenrand 26 stabilisiert.

Der Ventilkörper 2 weist die notwendigen Dichtmittel auf, um die Dichtigkeit des Ventils gegenüber dem Ventilteller 1 um dem Stem 3 sicher zu stellen. Dies sind ventiltellerseitig eine Reihe von Dichtlippen 22, die gegen den gerundeten Bereich 13 des Ventiltellers 1 im Übergang von der Wanne 11 zum aufgehenden Rand 12 angeordnet sind. Dosenseitig d. h. auf der dem Doseninneren zugewandten Seite des Ventilkörpers 2 befinden sich zwei umlaufende Dichtlippen 23, die im Wesentlichen parallel zueinander und zum Verlauf der zentralen Ausnehmung 21 an sich laufen und gegen den Fuß 31 des Stems 3 wirken. Der Fuß 31 dient als Dichtsitz und ist eine konzentrische Erweiterung des Stems 3 mit leicht gewölbtem Verlauf. In der hier dargestellten Ruhe- oder Verschlussstellung des Stems wirken die Dichtlippen 23 gegen den Fuß 31 und verhindern den Eintritt von Doseninhalt in die Eintrittsöffnung 33 des Stems 3.

Ventilseitig, d. h. nach außen weisend, weist der Ventilkörper 2 eine konzentrische Erweiterung der zentralen Ausnehmung 21 auf, die unmittelbar an den aufgehenden Rand 24 anschließt und zur Aufnahme des Fußteils des elastischen Elements 4 dient.

In der zentralen Ausnehmung 21 des Ventilkörpers 2 ist der Stem 3 geführt, der eine zentrale, und verschlossene Bohrung 34 aufweist, die als Austrittskanal für den Doseninhalt dient. Dosenseitig weist der Stem 3 wenigstens eine seitliche Durchbrechung 33 auf, die als Eintrittsöffnung für den Doseninhalt dient. In der dargestellten Ruhestellung des Ventils ist diese Eintrittsöffnung 33 durch die Dichtwirkung der Lippen 23 des Ventilkörpers 2 gegen den Dichtsitz 31 des Stems verschlossen. Bei Eindrücken des Ventils 3 verlieren die Lippen 23 ihre Dichtwirkung und Doseninhalt kann über die Eintrittsöffnung 33 in den Kanal 34 gelangen und austreten.

In der Regel weist der Stem 3 wenigstens zwei Eintrittsöffnungen 33 auf.

Ventilseitig, d. h. im Bereich seines oberen Randes weist der Stem 3 eine umlaufende Nut 32 auf, in der ein Befestigungsring 5 festgelegt werden kann. Zwischen der Unterseite 51 des Befestigungsrings 5 und der konzentrischen Erweiterung 27 der zentralen Ausnehmung 21 des Ventilkörpers 2 befindet sich das elastische Element, dass in diesem Fall als Formteil aus einem thermoplastischen Elastomer gefertigt ist und gummielastische Eigenschaften aufweist. Das Formteil 4 ist mit seinem Fußteil 41 in der konzentrischen Erweiterung 27 der Ausnehmung 21 des Ventilkörpers 2 festgelegt und stützt sich mit seinem Kopfteil 42 gegen die Unterseite 51 des Befestigungsrings 5 ab. Im zentralen Bereich 47 verläuft das Formteil in einigem Abstand zur Außenwandung des Stems 3, während es mit seinem Fußteil 41 an seinem Kopfteil 42 unmittelbar an dem Stem 3 angrenzt. Zwei umlaufende konzentrische Ausnehmungen 46 im Fußteil 41 und 48 im Kopfteil 42 dienen als Volumenreserve, um das bei Kompression des Formteils 4 verdrängte Volumen aufzunehmen und damit die Betätigung des Ventils zu erleichtern.

Bei der dargestellten Form des Feststoffventils handelt es sich um ein Ventil, dass zum Anschluss an eine Spritzpistole bestimmt ist und durch Eindrücken des Stems 3 betätigt wird. Das elastische Element 4 wirkt dabei als "Feder", dass dem Stem nach Beendigung der Entnahme von Doseninhalt in die Ruheposition zurück bewegt. Das bei der Kompression verdrängte Volumen des elastischen Elements 4 kann teilweise nach außen ausweichen, wird aber im Fußteil 41, dass zwischen der Außenwandung des Stems 3 einerseits und dem aufgehenden Rand 24 des Ventilkörpers 2 eingeklemmt ist, vor allem in der Nut 46 aufgenommen. Die Nut 46 hat sich als wesentlich für die Funktionsfähigkeit des Ventils erwiesen, dass ohne diese Nut nur mit erheblich höherem Kraftaufwand betätigt werden könnte. Gleichzeitig sind die beiderseits der Nut angeordneten Wülste des elastischen Elements 4, die gegen den Stem wirken, ein Dichtelement, das den Austritt von Doseninhalt entlang der Außenwandung des in der zentralen Ausnehmung 21 des Ventilkörpers 2 geführten Stems verhindert, wenn die Dichtlippen 23 außer Funktion sind.

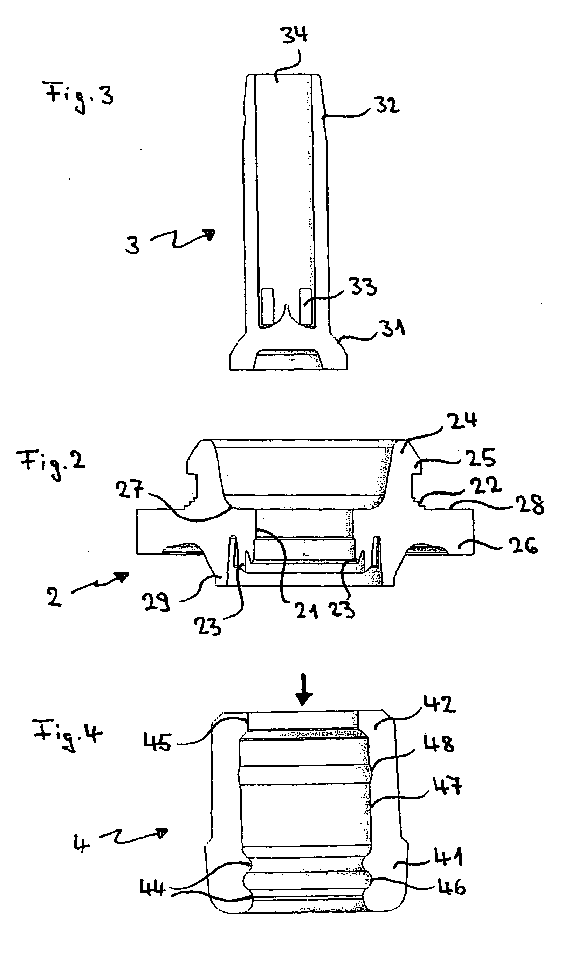

Figur 2 zeigt den Ventilkörper 2 mit der zentralen Ausnehmung 21 zur Führung des Stems 3 (nicht dargestellt). Ventilseitig erweitert sich die zentrale Ausnehmung 21 zur konzentrischen Erweiterung 27, die das elastische Element 4 aufnimmt. Der aufgehende Rand 24 greift mit dem nach außen weisenden Vorsprung 25 über den inneren aufgehenden Rand des Ventiltellers 1. Dosenseitig schmiegt sich der Ventilkörper 2 mit der Fläche 28 an der Unterseite der Wanne 11 des Ventiltellers 1 an. Drei Dichtlippen 22 sorgen für die Dichtigkeit des Sitzes des Ventilkörpers 2 am Ventilteller 1.

Zwei konzentrisch umlaufende dosenseitig angeordnete Ränder 26, der eine an der Peripherie, der andere in etwa in der Verlängerung des aufgehenden Randes 24, dienen der Stabilisierung des Formkörpers 2. Unmittelbar angrenzend an die zentrale Ausnehmung 21 befinden sich, im Verlauf im Wesentlichen parallel dazu, die konzentrischen Dichtlippen 23, die gegen die Erweiterung 31 des Stems 3 als Dichtsitz wirken.

Figur 3 zeigt den Stem 3 von Figur 1 mit der zentralen Bohrung 34, die gleichzeitig die Austrittsöffnung darstellt und zwei peripheren Eintrittsöffnungen 33 im dosenseitigen Bereich des Stems. Der Kanal 34 ist dosenseitig als Blindbohrung ausgelegt und nur über die Eintrittsöffnungen 33 vom Inneren der Druckdose her zugänglich.

Im Fußbereich des Stems 3 befindet sich eine Erweiterung 31 als Dichtsitz, die im gezeigten Fall eine nach außen gewölbte Oberfläche hat. Andere Außengeometrien sind ebenfalls möglich, beispielsweise eine Kegelstumpfform. Im Kopfteil befindet sich eine umlaufende Nut 32, die der Aufnahme und Festlegung des Befestigungsrings 5 dient.

Figur 4 zeigt das elastische Element von Figur 1, das den Stem 3 umgibt und sich ventilseitig an dem Befestigungsring 5 und dosenseitig in der konzentrischen Erweiterung 27 abstützt. Das elastische Element 4 aus einem gummielastischem Material weist generell eine Wandung auf, die im Fußteil 41 und im Kopfteil 42 mit den Wülsten 44 und dem Rand 45 unmittelbar an den Stem 3 heranreichen. Im dazwischenliegenden Bereich 47 verläuft das elastische Element im Wesentlichen parallel und im Abstand zum Stem, abgesehen von der konzentrischen Ausnehmung 48. Zwischen den Wülsten 44 befindet sich die konzentrische Ausnehmung 46.

Das elastische Element 4 schmiegt sich mit seiner Außenkontur des Fußteils 41 im Wesentlichen an die Innenwandung der konzentrischen Erweiterung 27 des Ventilkörpers 2 an. Die Wülste 44 dienen als Dichtung gegen den Stem bei geöffnetem Ventil. Da bei der Betätigung des Ventils das elastische Element in Richtung des Pfeils zusammengedrückt wird, wird im Bereich des Fußteils 41 Masse in die innen umlaufende Ausnehmung 46 gepresst, die damit als Volumenreserve dient. Gleichzeitig werden die Wülste 44 gegen die Außenwandung des Stems 3 gedrückt und verstärken die Dichtwirkung. Da das Fußteil 41 mit seiner Außenkontur 49 im Wesentlichen am Ventilkörper 2 anliegt, besteht für das elastische Element keine andere Möglichkeit, dem ausgeübten Druck auszuweichen.

Die vom Stem 3 zurückgesetzte Innenwandung 47 vermindert die Reibung zwischen Stem und elastischem Element und erleichtert damit die Auslösung. Die umlaufende Ausnehmung 48 dient zum einen der Aufnahme verdrängten Volumens bei der Kompression, erlaubt aber gleichzeitig auch ein Ausweichen nach außen.

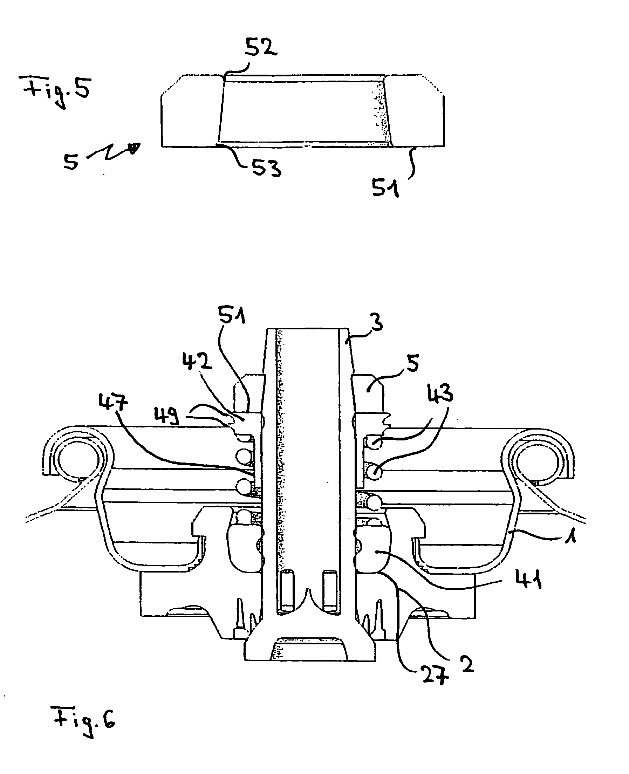

Figur 5 zeigt schließlich den Befestigungsring 5 gemäß Figur 1. Der Ring 5 hat auf seiner Innenseite eine vorspringende Kante 52, die in die Nut 32 am Stem 3 eingreift. Die Kante 52 springt dabei gegenüber der dosenseitige Kante 53 an der Unterseite 51 des Rings geringfügig nach innen vor. Die Nut 32 des Stems 3 hat einen komplementären Verlauf. Insgesamt ist der Innendurchmesser des Rings von Kante zu Kante in der Position 52 geringfügig kleiner als der Außendurchmesser des Stems 3, während der Durchmesser des Rings 5 in der Position 53 von Kante zu Kante in etwa dem Durchmesser des Stems 3 außerhalb der Nut 32 entspricht. Die Unterseite 51 dient als Widerlager für das elastische Element 4.

Figur 6 zeigt ein erfindungsgemäßes Feststoffventil mit einem Ventilteller, Ventilkörper, Stem und Befestigungsring, die im Wesentlichen der in Figur 1 dargestellten Variante entsprechen. In der dargestellten Variante weist der Stem allerdings vier Eintrittsöffnungen auf und hat einen insgesamt größeren Durchmesser des Kanals 34 zur Anbringung größerer Schaummengen. Der Ventilkörper 2 ist in seiner Ausführungsform stabiler und insgesamt geeignet, größere Kräfte sowohl von der Innenseite der Druckdose her als auch von der Ventilseite her aufzunehmen.

Das elastische Element ist insgesamt dreiteilig ausgebildet, von denen das Fußteil 41 und das Kopfteil 42 aus einem thermoplastischen Elastomer gefertigt sind. Das Fußteil 41 weist die bereits in Figur 4 beschriebene Konfiguration aus zwei Wülsten mit einer dazwischen befindlichen zentralen Ausnehmung in der Innenwandung auf. Das Fußteil ist in die konzentrische Erweiterung 27 des Ventilkörpers 2 eingepasst.

Ventilseitig schließt sich an das Fußteil 41 und darauf abstützend eine Schraubenfeder 43 an, die sich ihrerseits ventilseitig gegen die Unterkante des Kopfteils 42 abstützt. Das Kopfteil 42 wiederum liegt an der Unterseite 51 des Befestigungsrings 5 an.

Peripher umlaufend weist das Kopfteil 42 zwei Dichtlippen 49 auf, die gegen die Innenwandung einer Aufnahme einer Spritzpistole abdichten. Eine dosenseitig herabreichende Verlängerung 47 ist als freie Schürze ausgebildet, die den Stem 3 in einem geringen Abstand umgibt.

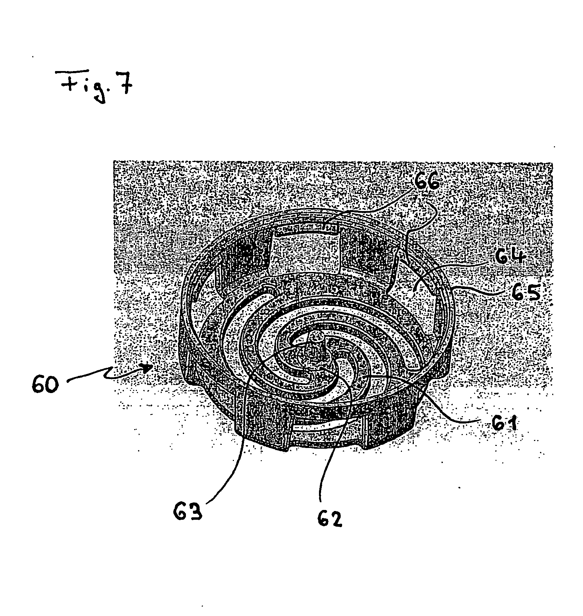

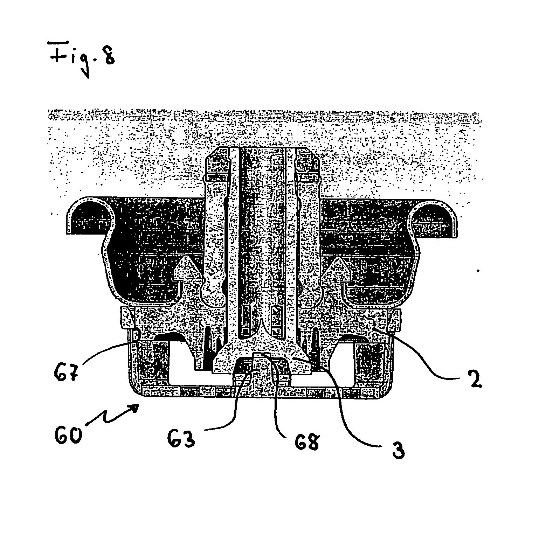

Fig. 7 zeigt einen Federkorb 60 mit spiralig angeordneten Federelementen 61, die zentral zu einem Knotenpunkt 62 mit einem Stützelement 63 zusammenlaufen. Die Federelemente 61 bilden den Boden des Korbs 60, der weiterhin eine mit Durchbrechungen 64 versehene Wandung 65 aufweist. Die Wandung 65 weist an der dem Boden abgewandten Seite an den Durchbrechungen einwärts weisende Vorsprünge 66 auf, die in den entsprechenden Ausnehmungen 67 (Fig. 8) am Ventilkörper 2 eingreifen.

Fig. 8 zeigt ein erfindungsgemäßes Ventil mit angesetztem Federkorb 60, der über die einwärts weisenden Vorsprünge 66 in Ausnehmungen 67 am Ventilkörper 2 festgelegt ist. Das Stützelement 63 ragt zentral in eine Ausnehmung 68 am dosenseitigen Ende des Stems 3 und stützt diesen zusätzlich ab. Die zahlreichen Durchbrechungen im Federkorb 60 sowohl im Boden- wie auch im Wandbereich erlauben stets den ungehinderten Zutritt des Doseninhalts zum Ventilmechanismus.

Die Ausführungsformen gemäß Figur 6 bis 8 erlauben Anwendungen, die eine erhöhte Rückstellkraft des elastischen Elements 4 verlangen

Insgesamt sind die erfindungsgemäßen Feststoffventile vor allem für die Verwendung zusammen mit Spritzpistolen ausgelegt. Es versteht sich aber von selbst, dass andere Formen von Ausbringhilfen ebenfalls verwandt werden können.

## Patentansprüche

1. Feststoffventil für Druckdosen, insbesondere für die Ausbringung von Montageschäumen, mit einem Ventilteller (1), einem in dem Ventilteller (1) angeordneten Ventilkörper (2), mit einem in einer zentralen Ausnehmung (21) des Ventilkörpers (2) geführten Stem (3) mit wenigstens einer durch Betätigung des Stems (3) freigebbaren Eintrittsöffnung (33) für den Druckdoseninhalt sowie wenigstens einer Austrittsöffnung, einem auf den Stem (3) wirkenden elastischen Element (4) und zwischen Ventilteller (1) und Ventilkörper (2) sowie zwischen Ventilkörper (2) und Stem (3) wirkenden Dichtelementen (22, 23), **dadurch gekennzeichnet, dass** das elastische Element (4) wenigstens ein aus einem gummielastischen Material bestehendes Formteil aufweist, das den Stem (3) konzentrisch umgibt, wobei das elastische Element (4) sich mit seinem der Druckdose zugewandten Ende, d.h. dosenseitig, in einer konzentrischen Erweiterung (27) der zentralen Ausnehmung (21) des Ventilkörpers (2) und mit seinem aus der Druckdose herausweisenden Ende, d.h. ventilseitig, am Stem (3) abstützt.

2. Feststoffventil nach Anspruch 1, **dadurch gekennzeichnet, dass** der Ventilteller (1) einen zentralen Abschnitt (11) mit wannenförmigen Profil und einen hochgezogenen Innenrand (12) aufweist, an dem der Ventilkörper (2) festgelegt ist.

3. Feststoffventil nach Anspruch 2, **dadurch gekennzeichnet, dass** der Ventilkörper (2) einen aufgehenden Rand (24) aufweist, der mit einem nach
außen weisenden Vorsprung (25) über den Innenrand (12) des Ventiltellers (1) greift.

4. Feststoffventil nach einem der vorstehenden Ansprüche, **dadurch gekennzeichnet, dass** der Ventilkörper (2) dosenseitig einen die Form stabilisierenden, außen konzentrisch umlaufenden Rand (26) aufweist.

5. Feststoffventil nach einem der vorstehenden Ansprüche, **dadurch gekennzeichnet, dass** der Ventilkörper (2) in seinem Kontaktbereich zum Ventilteller (1) konzentrisch umlaufende Dichtlippen (22) aufweist.

6. Feststoffventil nach Anspruch 5, **dadurch gekennzeichnet, dass** die Dichtlippen (22) auf einen einwärts gerundeten Bereich (13) des Ventiltellers (1) am Fuß des Innenrands (12) wirken.

7. Feststoffventil nach einem der vorstehenden Ansprüche, **dadurch gekennzeichnet, dass** der Ventilkörper (2) wenigstens eine konzentrisch umlaufende Dichtlippe (23) aufweist, die gegen einen arn Stem (3) angeordneten Dichtsitz (31) wirkt.

8. Feststoffventil nach Anspruch 7, **dadurch gekennzeichnet, dass** der Dichtsitz (31) eine am druckdosenseitigen Ende des Stems (3) angeordnete konzentrische Erweiterung des Stems (3) mit konischem oder gewölbtem Außenverlauf ist.

9. Feststoffventil nach Anspruch 7 oder 8, **dadurch gekennzeichnet, dass** der Ventilkörper zwei Dichtlippen (23) aufweist, die im Abstand zueinander und im Wesentlichen parallel zum Verlauf des Stems (3) auf den Dichtsitz (31) des Stems (3) ausgerichtet sind.

10. Feststoffventil nach einem der vorstehenden Ansprüche, **dadurch gekennzeichnet, dass** der Stem (3) am ventilseitigen Ende eine Nut (32) aufweist, in der ein Befestigungsring (5) festgelegt ist, an dessen dosenseitiger Fläche (51) sich das elastische Element (4) abstützt, wobei das elastische Element (4) vorzugsweise aus einem thermoplastischen Elastomer besteht.

11. Feststoffventil nach einem der vorstehenden Ansprüche, **dadurch gekennzeichnet, dass** das elastische Element (4) in seinem zentralen Bereich (47) im Abstand zur Außenwandung des Stems (3) verläuft, wobei das elastische Element (4) zusätzlich eine Ausnehmung (48) in der Innenwandung am ventilseitigen Ende aufweisen kann.

12. Feststoffventil nach einem der Ansprüche 9 bis 11, **dadurch gekennzeichnet, dass** das elastische Element (4) zusätzlich ein Federelement (43) aufweist, das in das elastische Element (4) integriert ist und/oder dieses verstärkt, wobei das elastische Element (4) in Fußteil (41), Kopfteil (42) sowie der zwischen Fußteil (41) und Kopfteil (42) eingespannten Schraubenfeder (43) bestehen kann oder in Form eines dosenseitig am Ventilteller (1) oder Ventilkörper (2) festgelegten Federkorb (60), der gegen das dosenseitige Ende des stems (3) wirkt.

13. Feststoffventil nach einem der vorstehenden Ansprüche, **dadurch gekennzeichnet, dass** das elastische Element (4) am dosenseitigen Ende wenigstens eine innen umlaufende Dichtlippe (44) aufweist, vorzugsweise zwei Dichtlippen (44) und zwischen diesen angeordnete und umlaufende konzentrische Ausnehmung (46).

14. Druckdose, insbesondere zur Ausbringung von Montageschaum, mit einem Feststoffventil nach einem der vorstehenden Ansprüche.

## Claims

1. Solid material valve for pressurized cans, especially for the discharge of mounting foams, provided with a valve disk, a valve body (2) arranged in the valve disk (1), a stem (3) guided within a central cut-out (21) of the valve body (2), with at least one inlet opening (33) cleared for the passage of the can contents by actuating said stem (3) as well as at least one discharge opening, one elastic element (4) acting on the stem (3) and sealing elements (22, 23) arranged and acting between the valve disk (1) and valve body (2) and between valve body (2) and stem (3), **characterized in that** the elastic element (4) is provided with at least one formed part made of a rubber-elastic material and surrounding the stem (3) concentrically with said elastic element (4) resting in a concentric enlargement (27) of the central cut-out of the valve body (2) at the end facing towards the pressurized can, i.e. at the can side and on the stem (3) at the end pointing out of the can, i.e. at the valve side.

2. Solid material valve according to claim 1, **characterized in that** the valve disk (1) consists of a central section (11) with a trough-shaped profile and an upright inner rim (12) at which the valve body (2) is located.

3. Solid material valve according to claim 2, **characterized in that** the valve body (2) has an upright rim (24) provided with an outward projection (25) engaging with and extending over the inside rim (12) of the valve disk (1).

4. Solid material valve according to any one of the above claims, **characterized in that** the valve body (2) is provided towards the can side with a concentric circumferential outer ring (26) that serves stabilizing purposes.

5. Solid material valve according to any one of the above claims, **characterized in that** the valve body (2) in its contact zone to the valve disk (1) is provided with concentric circumferential sealing lips (22).

6. Solid material valve according to claim 5, **characterized in that** the sealing lips (22) act on an inwardly rounded area (13) of the valve disk (1) at the base of the inner rim (12).

7. Solid material valve according to any one of the above claims, **characterized in that** the valve body (2) is provided with at least one concentric circumferential sealing lip (23) acting against a sealing face or seat (31) arranged on a stem (3).

8. Solid material valve according to claim 7, **characterized in that** the sealing face or seat (31) is a concentric enlargement of the stem (3) located at the can-side stem end and having a tapered or arched outer contour.

9. Solid material valve according to claim 7 or 8, **characterized in that** the valve body is provided with two sealing lips (23) spaced away from each other and arranged essentially in parallel with the stem (3) and acting on the sealing face or seat (31) of stem (3).

10. Solid material valve according to any one of the above claims, **characterized in that** on the valve side the stem (3) has a groove (32) which accommodates a retaining ring (5), with the elastic element (4) abutting against the can-side face (51) of said ring and with the elastic element (4) preferably consisting of a thermoplastic elastomer.

11. Solid material valve according to any one of the above claims, **characterized in that** the elastic element (4) in its central area (47) is spaced away from the outer wall of the stem (3) and said elastic element (4) may be provided with an additional recess (48) arranged in the inner wall on the valve-side end.

12. Solid material valve according to any one of claims 9 to 11, **characterized in that** the elastic element (4) is additionally provided with a spring element (43) integrated into and/or strengthening the elastic element (4), and said elastic element (4) may consist of bottom part (41), top part (42) as well as coil spring (43) which may be located between bottom part (41) and top part (42) or be provided in the form of a spring cage (60) secured on the can side of the valve disk (1) or valve body (2), said cage acting against the can-side end of the stem (3).

13. Solid material valve according to any one of the above claims, **characterized in that** the elastic element (4) is provided with at least one circumferential inner sealing lip (44) on the can side end, preferably with two sealing lips (44) and a circumferential concentric recess (46) arranged between said lips.

14. Pressurized can, in particular for the discharge of mounting foam, being provided with a solid material valve in accordance with any one of the above claims.

## Revendications

1. Soupape en matière solide pour récipients sous pression, en particulier pour appliquer des mousses de montage, avec un disque de soupape (**1**), un corps de soupape (**2**) placé dans le disque de soupape (**1**), avec une tige (**3**) guidée dans un évidement central (**21**) du corps de soupape (**2**) et comportant au moins une ouverture d'entrée (**33**) pouvant être dégagée par un actionnement de la tige (**3**) pour le contenu du récipient sous pression ainsi qu'au moins une ouverture de sortie, un élément élastique (**4**) agissant sur la tige (**3**) et des éléments d'étanchéité (**22, 23**) agissant entre le disque de soupape (**1**) et le corps de soupape (**2**) et entre le corps de soupape (**2**) et la tige (**3**), **caractérisée en ce que** l'élément élastique (**4**) présente au moins une partie moulée constituée d'un matériau élastique, qui entoure la tige (**3**) de façon concentrique, dans laquelle l'élément élastique (**4**) prend appui par son extrémité tournée vers le récipient sous pression, c'est-à-dire du côté du fond, dans un élargissement concentrique (**27**) de l'évidement central (**21**) du corps de soupape (**2**), et par son extrémité sortant du récipient sous pression, c'est-à-dire côté soupape, contre la tige (**3**).

2. Soupape en matière solide selon la revendication 1, **caractérisée en ce que** le disque de soupape (**1**) présente une section centrale (**11**) à profil en forme de bac et à bord intérieur (**12**) relevé, sur lequel est fixé le corps de soupape (**2**).

3. Soupape en matière solide selon la revendication 2, **caractérisée en ce que** le corps de soupape (**2**) présente un bord montant (**24**) qui se met en prise, avec une saillie (**25**) tournée vers l'extérieur, sur le bord intérieur (**12**) du disque de soupape (**1**).

4. Soupape en matière solide selon l'une des revendications précédentes, **caractérisée en ce que** le corps de soupape (**2**) présente, côté récipient, un bord (**26**) périphérique concentrique extérieur stabilisant la forme.

5. Soupape en matière solide selon l'une des revendications précédentes, **caractérisée en ce que** le corps de soupape (**2**) présente des lèvres d'étanchéité concentriques (**22**) dans sa zone de contact avec le disque de soupape (**1**).

6. Soupape en matière solide selon la revendication 5, **caractérisée en ce que** les lèvres d'étanchéité (**22**) agissent sur la zone (**13**) du disque de soupape (**1**) arrondie vers l'intérieur au pied du bord intérieur (**12**).

7. Soupape en matière solide selon l'une des revendications précédentes, **caractérisée en ce que** le corps de soupape (**2**) présente au moins une lèvre d'étanchéité (**23**) périphérique concentrique qui agit contre un siège d'étanchéité (**31**) placé sur la tige (**3**).

8. Soupape en matière solide selon la revendication 7, **caractérisée en ce que** le siège d'étanchéité (**31**) est un élargissement concentrique de la tige (**3**) placé à l'extrémité de la tige (**3**) côté récipient sous pression et présentant un contour extérieur conique ou bombé.

9. Soupape en matière solide selon la revendication 7 ou 8, **caractérisée en ce que** le corps de soupape présente deux lèvres d'étanchéité (**23**) qui sont orientées à distance l'une de l'autre et, pour l'essentiel, parallèlement à l'extension de la tige (**3**) en direction du siège d'étanchéité (**31**) de la tige (**3**).

10. Soupape en matière solide selon l'une des revendications précédentes, **caractérisée en ce que** la tige (**3**) présente, à l'extrémité côté soupape, une rainure (**32**) dans laquelle est fixée une bague de fixation (**5**), contre la surface (**51**) côté récipient de laquelle s'appuie l'élément élastique (**4**), l'élément élastique (**4**) étant constitué de préférence d'un élastomère thermoplastique.

11. Soupape en matière solide selon l'une des revendications précédentes, **caractérisée en ce que** l'élément élastique (**4**) s'étend dans sa partie centrale (**47**) à distance de la paroi extérieure de la tige (**3**), l'élément élastique (**4**) présentant de plus un évidement (**48**) dans la paroi intérieure à l'extrémité côté soupape.

12. Soupape en matière solide selon l'une des revendications 9 à 11, **caractérisée en ce que** l'élément élastique (**4**) présente de plus un élément à ressort (**43**) qui est intégré dans l'élément élastique (**4**) et/ou renforce celui-ci, dans lequel l'élément élastique (**4**) peut être constitué d'une partie de pied (**41**), d'une partie de tête (**42**) et d'un ressort hélicoïdal (**43**) inséré entre partie de pied (**41**) et partie de tête (**42**), ou sous la forme d'une cage de ressort (**60**) fixée côté récipient sur le disque de soupape (**1**) ou le corps de soupape (**2**), cage qui agit contre l'extrémité de la tige (**3**) côté récipient.

13. Soupape en matière solide selon l'une des revendications précédentes, **caractérisée en ce que** l'élément élastique (**4**) présente, à l'extrémité côté récipient, au moins une lèvre d'étanchéité (**44**) périphérique intérieure, de préférence deux lèvres d'étanchéité (**44**), et un évidement concentrique (**46**) placé entre celles-ci et circulant entre elles.

14. Récipient sous pression, en particulier pour appliquer une mousse de montage, avec une soupape en matière solide selon l'une des revendications précédentes.
